# EUROPEAN PATENT APPLICATION

(11) **EP 4 831 406 A1**
(43) Date of publication of application: **28.10.2026**
(21) Application number: 23962309.3
(22) Date of filing: 18.12.2023
(51) Int. Cl.: E02F 9/22, E02F 5/14

(54) **AUTOMATIC TRENCHING SYSTEM OF CONSTRUCTION MACHINE AND AUTOMATIC TRENCHING CONTROL METHOD OF CONSTRUCTION MACHINE**

(71) Applicant: Volvo Construction Equipment AB, 631 85 Eskilstuna (SE)
(72) Inventor: KIM, Jiyun, Changwon-si, Gyeongsangnam-do 51710 (KR); KIM, Sungsu, Changwon-si, Gyeongsangnam-do 51710 (KR)
(74) Representative: Kransell & Wennborg KB
(86) International application number: PCT/KR2023/020843
(87) International publication number: WO 2025/135203

(57) **Abstract**

One aspect of the present disclosure relates to an automatic trenching system of a construction machine including an undercarriage, a superstructure rotatably coupled to the undercarriage, and a working device including a boom, an arm, and a bucket mounted on the superstructure, the automatic trenching system comprising: a sensor unit that detects attitude information of the construction machine; a setting unit capable of setting a trench target area to be worked on; and an electronic control unit that controls the construction machine to perform trenching work along a set trench target area, wherein the electronic control unit compares the width of the trench target area with the width of the bucket to determine the length and width of a working area in which the construction machine can perform trenching work in place.

## Description

### TECHNICAL FIELD

The present disclosure generally relates to a construction machine. In a specific aspect, the present disclosure relates to an automatic trenching system of a construction machine and an automatic trenching control method of the construction machine. The present disclosure may be applied to large vehicles, such as trucks, buses, and construction equipment. The present disclosure may be described with respect to a particular vehicle, but the present disclosure is not limited to any specific vehicle.

### BACKGROUND

In general, an excavator is a construction machine that performs various operations, such as excavation work for digging the ground at construction sites and the like, loading work for transporting soil, foundation excavation for forming a foundation, crushing work for demolishing buildings, leveling work for preparing the ground, and grading work for smoothing the ground.

In trenching work such as ditch digging, an operator repeats the work of excavating the ground to form a trench and the work of driving the construction machine in reverse by a certain distance.

Currently, the trenching work is carried out by manual operation of the operator, which leads to problems in that the trenching work is complicated and the results of the trenching work vary depending on the operator.

### SUMMARY

According to a first aspect of the present disclosure, there is provided an automatic trenching system of a construction machine including an undercarriage, a superstructure rotatably coupled to the undercarriage, and a working device including a boom, an arm, and a bucket mounted on the superstructure, the automatic trenching system comprising: a sensor unit that detects attitude information of the construction machine; a setting unit capable of setting a trench target area to be worked on; and an electronic control unit that controls the construction machine to perform trenching work along a set trench target area, wherein the electronic control unit compares the width of the trench target area with the width of the bucket to determine the length and width of a working area in which the construction machine is capable of performing trenching work in place.

Optionally, in some examples, the electronic control unit may determine the width of the working area to be equal to the width of the trench target area.

Optionally, in some examples, the electronic control unit may determine the length of the working area to a first set length when the width of the trench target area is equal to the width of the bucket, and the first set length may be the length between a first position of the bucket when the working device extends by a certain distance and a second position of the bucket when a bottom surface of the bucket is horizontal to the ground.

Optionally, in some examples, the electronic control unit may determine the length of the working area as a second set length when the width of the trench target area is greater than the width of the bucket, and the second set length may be the length between a first position of the bucket when the working device extends by a certain distance and a third position of the bucket when an angle formed between the bucket and a side surface of the trench target area is a predetermined angle.

Optionally, in some examples, the electronic control unit may control the operation of the superstructure and the working device such that the construction machine forms a trench in the working area.

Optionally, in some examples, the automatic trenching system may further comprise: a scanning unit that scans the working area to generate terrain information, wherein the electronic control unit may divide the working area into multiple rows and columns.

Optionally, in some examples, the electronic control unit may inspect a quality of trenching work row by row from a front side to a rear side of the working area, based on the terrain information provided by the scanning unit.

Optionally, in some examples, the electronic control unit may inspect a quality of a next row when an error of the inspected row is equal to or less than a reference value, and may control the operation of the superstructure and the working device such that the trenching work is performed again starting from a row positioned forward of the row, when the error of the inspected row is greater than the reference value. The technical advantage is that the precision of the trenching work can be improved because the construction machine performs the trenching work again starting from a row positioned forward of a row with low quality.

Optionally, in some examples, the electronic control unit may control the driving of the undercarriage such that the construction machine moves backward by a distance less than the length of the working area, when an error of the last row of the working area is equal to or less than the reference value. The technical advantage is that a rear part of the trench already worked by the construction machine and a front part of the trench in which the construction machine to be subsequently worked by the construction machine have an overlapping area by a predetermined margin, thereby improving the precision of the trenching work.

According to another aspect of the present invention, there may be provided an automatic trenching control method of a construction machine including an undercarriage, a superstructure rotatably coupled to the undercarriage, and a working device including a boom, an arm, and a bucket mounted on the superstructure, the automatic trenching control method comprising: a step (S10) of setting a trench target area to be worked on; a step (S20) of determining the width and length of a working area in which the construction machine is capable of performing trenching work in place by comparing the width of the trench target area with the width of the bucket; a step (S30) of controlling the operation of the superstructure and the working device to perform trenching work on the working area; and a step (S40) of inspecting a quality of the work by scanning the working area.

Optionally, in some examples, in step S40, the quality of the trenching work may be inspected row by row from a front side to a rear side of the trench target area.

Optionally, in some examples, in step S40, a quality of a next row may be inspected when an error of the inspected row is equal to or less than a reference value, and the trenching may be performed again starting from a row positioned forward of the row when the error of the inspected row is greater than the reference value.

Optionally, in some examples, the automatic trenching control method may further comprise: a step (S50) of controlling the driving of the undercarriage such that the construction machine moves backward by a distance less than the length of the working area so as to perform the work on a next working area.

The embodiments described above and below, the appended claims, and/or the examples disclosed herein may be appropriately combined as would be apparent to a person of ordinary skill in the art.

Additional features and advantages are described in the following description, claims, and drawings, and will be recognized in part as being readily apparent to those skilled in the art or through the practice of the disclosures set forth herein.

### BRIEF DESCRIPTION OF THE DRAWINGS

With reference to the accompanying drawings, a more detailed description of the embodiments of the present disclosure cited below as examples follows.
FIG. 1 is a perspective view illustrating a construction machine according to one embodiment of the present invention.
FIG. 2 is a view for explaining the bucket depth of the construction machine according to one embodiment of the present invention.
FIG. 3 is a block diagram illustrating the basic configuration of an automatic trenching system of the construction machine according to one embodiment of the present invention.
FIG. 4 is a view schematically illustrating the overall configuration of the automatic trenching system of the construction machine according to one embodiment of the present invention.
FIG. 5 is a block diagram of an electronic control unit.
FIGS. 6A and 6B are views schematically illustrating the construction machine that performs trenching work when the width of the set trench target area is equal to the width of the bucket.
FIGS. 7A and 7B are views schematically illustrating the construction machine that performs trenching work when the width of the set trench target area is greater than the width of the bucket.
FIG. 8 is a view illustrating a working area divided into multiple rows and columns.
FIG. 9 is a view schematically illustrating a state in which the construction machine has moved backward after working in the working area.
FIG. 10 is a flowchart illustrating an automatic trenching control method of the construction machine.
FIG. 11 is a flowchart illustrating the automatic trenching control method of the construction machine when the quality of some rows within the working area does not satisfy a reference value.

### DETAILED DESCRIPTION

The embodiments described below provide the information necessary for a person of ordinary skill in the art to practice the present disclosure.

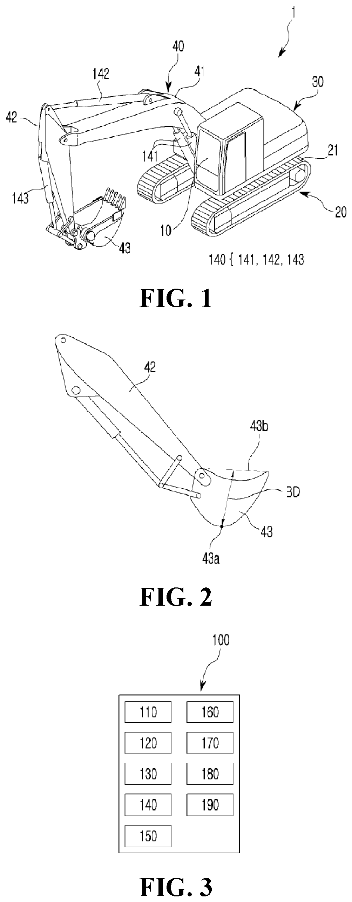

FIG. 1 is a perspective view illustrating a construction machine according to one embodiment of the present invention.

Referring to FIG. 1, a construction machine 1, such as an excavator, includes a cab 10, an undercarriage 20, a superstructure 30 rotatably installed on the undercarriage 20, a working device 40 and a hydraulic actuator 140 installed on the superstructure 30 so as to be vertically operable.

The undercarriage 20 may be, for example, a crawler or wheel type. For example, the construction machine 1 may move forward or backward depending on the driving direction of a track 21 or a wheel.

The working device 40 is formed as a multi-joint structure and includes a boom 41 having a rear end portion rotatably supported on the superstructure 30, an arm 42 having a rear end portion rotatably supported on a front end of the boom 41, and a bucket 43 rotatably installed at a front end side of the arm 42.

The hydraulic actuator 140 includes a boom actuator 141, an arm actuator 142, and a bucket actuator 143. When hydraulic fluid is supplied in response to operation of an operation lever by an operator, the boom actuator 141, the arm actuator 142, and the bucket actuator 143 operate the boom 41, the arm 42, and the bucket 43, respectively.

FIG. 2 is a view for explaining the bucket depth of the construction machine according to one embodiment of the present invention.

A bucket depth BD may be defined as the shortest distance between a vertex end 43a and an excavation surface 43b of the bucket 43. The excavation surface 43b may be defined as a surface connecting four corners of the bucket 43 opposite the vertex end 43a. The bucket depth BD may be used to determine a margin value described later.

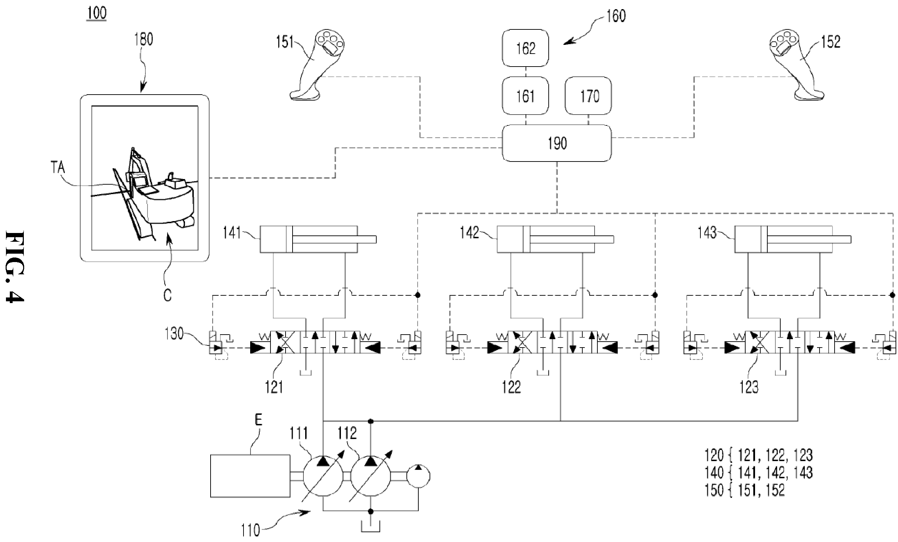

FIG. 3 is a block diagram illustrating the basic configuration of an automatic trenching system of the construction machine according to one embodiment of the present invention, and FIG. 4 is a view schematically illustrating the overall configuration of the automatic trenching system of the construction machine according to one embodiment of the present invention.

Referring to FIGS. 3 and 4, an automatic trenching system 100 of the construction machine may include a hydraulic pump 110, a control valve unit 120, an electronic proportional pressure reducing valve 130, the hydraulic actuator 140, an operation lever 150, a sensor unit 160, a scanning unit 170, a setting unit 180, and an electronic control unit 190.

The hydraulic pump 110 is driven by an engine E and discharges a high-pressure hydraulic fluid to operate the hydraulic actuator 140. The hydraulic pump 110 may include first and second hydraulic pumps 111 and 112.

The control valve unit 120 is a member that opens and closes a fluid path by means of a spool that axially moves by receiving a hydraulic pressure of the hydraulic fluid discharged from the hydraulic pump 110, and may include a first control valve 121, a second control valve 122, and a third control valve 123 that operate the boom actuator 141, the arm actuator 142, and the bucket actuator 143, respectively. In addition, the control valve unit 120 may also include a control valve that controls a traveling motor, a swing motor, and the like.

The control valve unit 120 is connected to the hydraulic pump 110 through a hydraulic line and induces supply of the hydraulic fluid from the hydraulic pump 110 to the hydraulic actuator 140. A pilot signal pressure generated during operation of the operation lever 150 may be applied to a spool of the control valve unit 120.

The electronic proportional pressure reducing valve 130 is an electronically operated valve, which generates a pilot signal pressure proportional to the strength of a control signal applied by the electronic control unit 190, for example, the strength of a current, and the generated pilot signal pressure is transmitted to the control valve unit 120. The pilot signal pressure from the electronic proportional pressure reducing valve 130 axially moves the spool in the control valve unit 120.

The hydraulic actuator 140 is operated by the hydraulic fluid provided from the hydraulic pump 110. The hydraulic actuator 140 may include a traveling motor, a swing motor, and the like in addition to the boom actuator 141, the arm actuator 142, and the bucket actuator 143 illustrated in FIG. 3.

The operation lever 150 may be a hydraulic joystick or an electric joystick, and preferably, the operation lever 150 is an electric joystick that generates an electrical signal proportional to an operation amount of the operator and provides the electrical signal to the electronic control unit 190.

The operation lever 150 may operate the vertical movement of the boom 41, the rotation of the arm 42 and the bucket 43, the swing of the superstructure 30, and the like. The operation lever 150 may be configured to include a first operation lever 151 and a second operation lever 152.

According to one embodiment, when any one of the first operation lever 151 and the second operation lever 152 is operated, an automatic trench mode may be activated.

According to one embodiment, the operation lever 150 may be provided thereon with a switch of various functions, for example, a switch for turning on or off the automatic trench mode.

The sensor unit 160 may include a global navigation satellite system (GNSS) sensor 161 and an attitude measurement sensor 162.

The GNSS sensor 161 may detect the current position and attitude of the construction machine in real time. Specifically, the GNSS sensor 161 may measure the current latitude, longitude, and altitude of the construction machine in real time and detect the current position of the construction machine in real time. In addition, the GNSS sensor 161 may detect the current attitude of the construction machine in real time. Real-time information about the current position and attitude of the construction machine, which are detected by the GNSS sensor 161, may be digital data.

The attitude measurement sensor 162 may measure the displacement, attitude, and/or angle of the superstructure, the boom, the arm, and the bucket using an inertial measurement unit (IMU), an angle sensor, and the like. For example, the attitude measurement sensor 162 may be disposed on each of the superstructure, the boom, the arm, and the bucket to detect the displacement, attitude, and/or angle of each of the superstructure, the boom, the arm, and the bucket.

The information measured by the sensor unit 160 may be provided to the electronic control unit 190.

The scanning unit 170 is disposed on one side of the construction machine to scan the worked trench area and generate 3D or 2D terrain information, and the generated information is provided to the electronic control unit 190.

The setting unit 180 may be configured as a display installed inside the cab, through which the operator may set a trench target area TA to be worked on. Preferably, the setting unit 180 may display the trench target area TA to be worked on, which is set by the operator, and real-time information C about the current position and attitude of the construction machine, which are detected by the sensor unit 160.

According to one embodiment, a button for activating the automatic trench mode may be displayed on the display of the setting unit 180, and the operator may activate the automatic trench mode by pushing the button.

Furthermore, information indicating the activation of the automatic trench mode and information about scan information may be displayed on the setting unit 180.

The electronic control unit 190 generates an electrical signal to cause the construction machine to excavate the set trench target area TA when the automatic trench mode is activated, and outputs the electrical signal to the electronic proportional pressure reducing valve 130. The electronic proportional pressure reducing valves 130 may move the spools of the control valve unit 120 according to the strength of the applied pilot signal pressure by supplying the pilot signal pressure proportional to the strength of the current applied by the electronic control unit 190 to each of the spools of the control valve unit 120. That is, the electronic control unit 190 controls the operation of the hydraulic actuator 140, that is, the operation of the working device, based on an operation signal output from the operation lever 150.

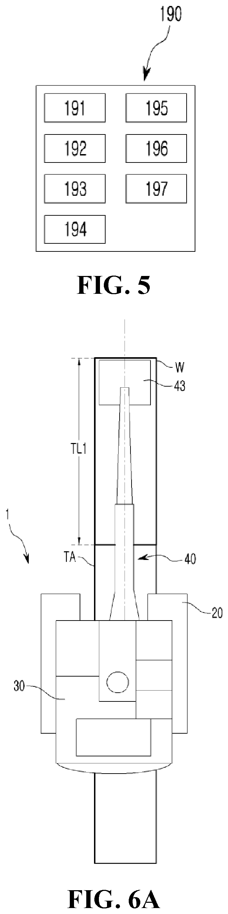

FIG. 5 is a block diagram of the electronic control unit.

Referring to FIG. 5, the electronic control unit 190 may include a data reception unit 191, a storage unit 192, a working area generation unit 193, an excavation control unit 194, a quality inspection unit 195, a traveling control unit 196, and an output unit 197.

The data reception unit 191 may receive the information detected by the sensor unit. The data reception unit 191 may receive digital data in real time, such as the current latitude, longitude, and altitude of an unmanned excavator, which are detected by the GNSS sensor, the current attitude of the unmanned excavator, the position and/or attitude of the superstructure, the boom, the arm and the bucket detected by the attitude measurement sensor, and the tilt of a body of the construction machine.

The data reception unit 191 may receive the 3D or 2D terrain information generated by the scanning unit.

In addition, the data reception unit 191 may receive information about the trench target area set by the setting unit and activation information about the automatic trench mode output from the setting unit, the operation lever, or the setting unit.

The storage unit 192 may store information about a first set length, a second set length, a third set length, a traveling limit length, and a margin value. The storage unit 192 may store the bucket depth that serves as a reference for the margin value.

The storage unit 192 may store information about the width of the bucket.

The storage unit 192 may store information about the bucket position and the attitude that serve as a reference upon the determination of the length of the working area.

On the other hand, when the width of the trench target area is greater than the width of the bucket, the length of the working area in which trenching work may be performed in place is shortened because the superstructure has to be operated in a swung state for some areas.

Accordingly, the working area generation unit 193 compares the width of the trench target area with the width of the bucket to determine the length and width of the working area in which the construction machine may perform trenching work in place. Specifically, the working area generation unit 193 sets the width of the working area to be equal to the width of the trench target area, and the length of the working area is set to the first set length when the width of the trench target area is equal to the width of the bucket, and to the second set length when the width of the trench target area is greater than the width of the bucket. In this case, the second set length is set to be less than the first set length.

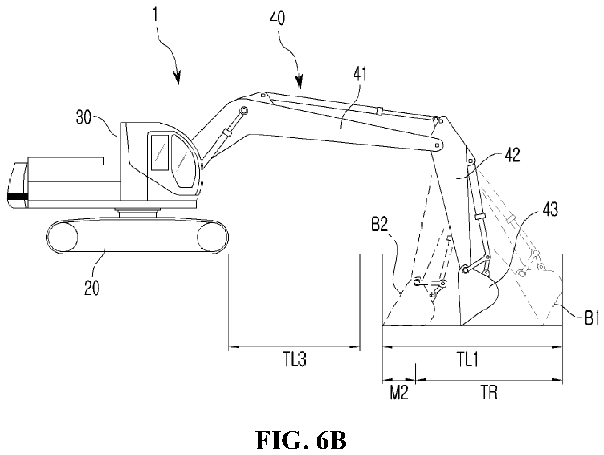

FIGS. 6A and 6B are views schematically illustrating the construction machine that performs trenching work when the width of the set trench target area is equal to the width of the bucket.

Referring to FIGS. 5 and 6A, the working area generation unit 193 sets the width of a working area W to be equal to the width of the trench target area TA.

In addition, the working area generation unit 193 sets the length of the working area W as a first set length TL1 because the width of the trench target area TA is equal to the width of the bucket 43.

Specifically, referring to FIG. 6B, the first set length TL1 may be the maximum length between a first position B1 of the bucket 43 when the working device 40 is extended by a certain length and a second position B2 of the bucket 43 when a bottom surface of the bucket 43 is horizontal to the ground. That is, the first set length TL1 may be the length between the position of the vertex end of the bucket 43 when the bucket 43 is positioned at the first position B1 and the position of the end of the bucket 43 when the bucket 43 is positioned at the second position B2.

The first set length TL1 may vary depending on the specifications of the construction machine 1, and a value thereof may be stored in the storage unit 192.

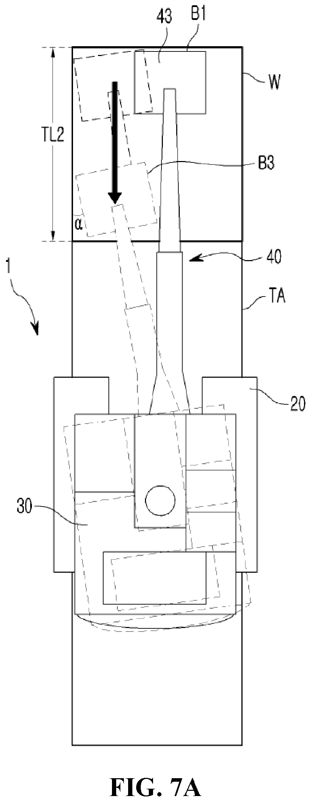

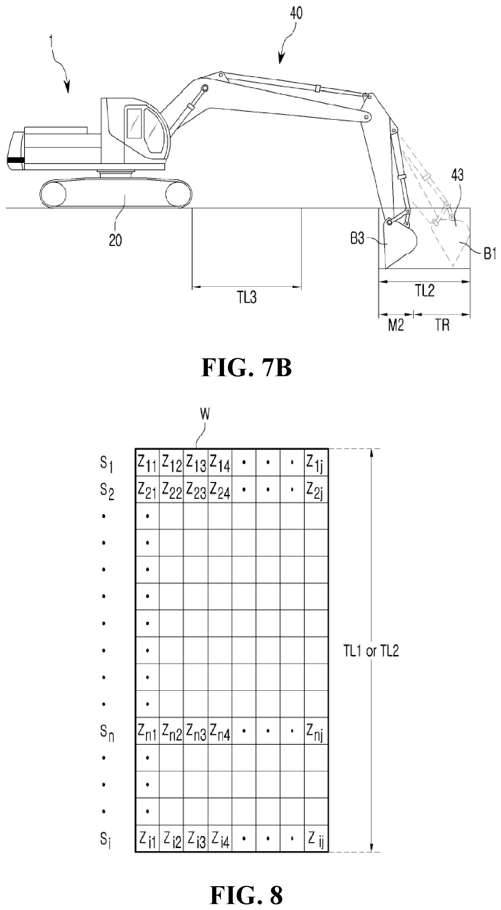

FIGS. 7A and 7B are views schematically illustrating the construction machine that performs trenching work when the width of the set trench target area is greater than the width of the bucket.

Referring to FIGS. 5 and FIGS. 7A, the working area generation unit 193 sets the width of the working area W to be equal to the width of the trench target area TA.

In addition, the working area generation unit 193 sets the length of the working area W as a second set length TL2 because the width of the trench target area TA is greater than the width of the bucket 43.

Meanwhile, referring to FIGS. 7A and 7B, when excavation is performed while swinging the superstructure 30, the end of the bucket 43 excavating an object is separated from the side of the trench target area TA by a predetermined angle, resulting in deterioration of the excavation efficiency.

Accordingly, an angle α formed between the bucket 43 and the side of the trench target area TA may be formed at an angle of 20 degrees or less, preferably 10 degrees or less. In this case, the angle α may be adjusted by the operator. In other words, the operator may adjust the angle α according to the width of the trench target area TA.

The second set length TL2 may be the maximum length between the first position B1 of the bucket 43 when the working device 40 extends by a certain length, and a third position B3 of the bucket 43 in which the angle formed between the bucket 43 and the side of the trench target area TA forms a preset angle α. That is, the second set length TL2 may be the length between the position of the vertex end of the bucket 43 when the bucket 43 is positioned at the first position B1 and the position of the end of the bucket 43 when the bucket 43 is positioned at the third position B3.

The second set length TL2 may vary depending on the specifications of the construction machine 1, and a value thereof may be stored in the storage unit 192.

The excavation control unit 194 may control the operation of the working device 40 such that the trench is formed to have a preset length TL1 or TL2. Specifically, the excavation control unit 194 may calculate a pilot signal pressure to control the operation of the hydraulic actuator of the working device 40. Additionally, the excavation control unit 194 may also control the operation of the superstructure 30 such that the object contained in the bucket 43 may be dumped at a predetermined position by excavation.

Referring to FIGS. 5 and 6A, when the width of the trench target area TA is equal to the width of the bucket 43, the excavation control unit 194 may excavate sequentially from a front side to a rear side of the working area W.

Referring to FIGS. 5 and 7A, when the width of the trench target area TA is greater than the width of the bucket 43, the excavation control unit 194 may divide the working area W in the width direction. For example, the excavation control unit 194 may first excavate from the front to the rear of the right side of the working area W, and then excavate from the front to the rear of the left side of the working area W.

When the quality of the row inspected by the quality inspection unit 195 does not satisfy a standard, the excavation control unit 194 may control the operation of the working device and the superstructure to perform trenching work again starting from a row positioned forward of the row.

Preferably, the excavation control unit 194 may control the operation of the working device and the superstructure such that trenching work is performed again starting from the row positioned forward of the row having the quality not satisfying the standard by a first margin. In this case, a first margin may be set to 50% to 80% of the bucket depth, but is not limited thereto.

That is, since the excavation control unit 194 performs excavation work while maintaining an overlapping area corresponding to a margin even within a single working area, the precision of the trenching work can be improved.

FIG. 8 is a view illustrating a working area divided into multiple rows and columns.

The quality inspection unit 195 inspects the work quality based on the terrain information provided by the scanning unit.

Specifically, the quality inspection unit 195 may divide the working area W into multiple rows and columns. In this case, the size of each cell may be set to the scan resolution of the scanning unit.

The quality inspection unit 195 inspects the quality row by row from the front side to the rear side of the working area W.

Specifically, the quality inspection unit 195 may calculate a value of *ZEᵢⱼ* = *abs*(*Zᵢⱼ* - *Target Z*) for each row, and compares *ZEᵢⱼ* with a reference value to determine whether an error of each row is equal to or less than the reference value, that is, whether the work quality of each row satisfies the standard. In this case, *Zᵢⱼ* is terrain information for each cell provided by the scanning unit, *Target Z* is a reference value, and *ZEᵢⱼ* is an error of row i.

Meanwhile, some soil that has flowed down during the excavation or dumping process may accumulate at the rear part of the constructed trench.

Accordingly, during the operation of a traveling assistance mode, the traveling control unit 196 controls the driving of the undercarriage such that the construction machine travels a distance less than the first set length TL1 or the second set length TL2, preferably a traveling limit length TR. The traveling limit length TR may be defined as a value obtained by subtracting a second margin M2 from the first and second set lengths TL1 and TL2, as illustrated in FIGS. 6B and 7B. The second margin M2 may be set to 50% to 80% of the bucket depth, but is not limited to thereto.

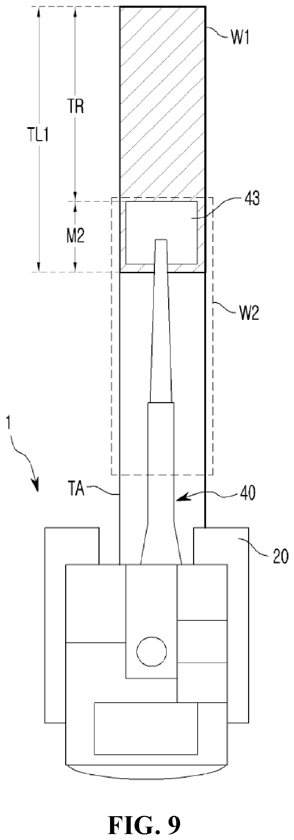

FIG. 9 is a view schematically illustrating a state in which the construction machine has moved backward after working in the working area.

Referring to FIGS. 5 and 9, during operation of the traveling assistance mode, the traveling control unit 196 controls the driving of the undercarriage 20 such that the construction machine 1 travels a distance less than the first set length TL1, preferably the traveling limit length TR.

When the construction machine 1 travels for the traveling limit length TR by the traveling control unit 196, a rear part of the working area W1 already worked by the construction machine 1 and a front part of the working area W2 to be subsequently worked by the construction machine 1 have an overlapping area corresponding to the second margin M2. As a result, the construction machine may excavate again from the rear part of the previous trench area W1, thereby improving the precision of the trenching work.

The traveling control unit 196 may calculate a pilot signal pressure for controlling the driving of a first traveling motor and a second traveling motor of the undercarriage.

Referring to FIGS. 5 and 6B, the traveling control unit 185 and/or the excavation control unit 186 may control the driving of the undercarriage 20 and/or the operation of the working device 40 such that a tip of the bucket 43 at the second position B2 is spaced apart from the front of the undercarriage 20 by at least the third set length TL3.

Referring to FIGS. 5 and 7B, the traveling control unit 185 and/or the excavation control unit 186 may control the driving of the undercarriage 20 and/or the operation of the working device 40 such that the tip of the bucket 43 at the third position B3 is spaced apart from the front of the undercarriage 20 by at least the third set length TL3.

This is to prevent the working device 40 from colliding with the undercarriage 20 and the superstructure 30.

Referring to FIGS. 4 and 5, the output unit 197 may generate a control signal, for example, a current, corresponding to an operation received from the operation levers 151 and 152 to apply the current to the electronic proportional pressure reducing valve 130.

The output unit 197 may generate a current corresponding to the pilot signal pressure calculated by the excavation control unit 194 to apply the current to the electronic proportional pressure reducing valve 130 of each of the control valves 121 and 122. Accordingly, the amount of hydraulic fluid supplied to the hydraulic actuator 140 may be controlled, thereby controlling the operation of the working device.

The output unit 197 may generate a current corresponding to the pilot signal pressure calculated by the traveling control unit 196 to apply the current to the electronic proportional pressure reducing valve 130 of each of the control valves 121, 122, and 123. Accordingly, the amount of hydraulic fluid supplied to the first and second traveling motors of the undercarriage may be controlled, thereby controlling the driving of the undercarriage.

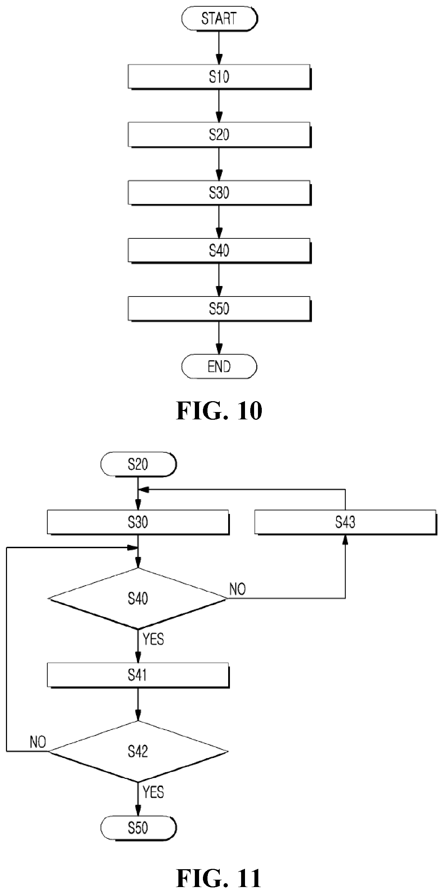

FIG. 10 is a flowchart illustrating an automatic trenching control method of the construction machine.

Hereinafter, an automatic trenching control method of the construction machine according to one embodiment of the present invention will be described with reference to FIGS. 6A, 7A, and 10.

The automatic trenching control method of the construction machine according to one embodiment of the present invention includes a step S10 of setting a trench target area TA to be worked on.

The automatic trenching control method of the construction machine according to one embodiment of the present invention includes a step S20 of determining the width and length of the working area W in which the construction machine 1 may perform trenching work in place by comparing the width of the trench target area TA with the width of the bucket 43. In step S20, the width of the working area W is set to be equal to the width of the trench target area TA, and the length of the working area W is set as the first set length TL1 when the width of the trench target area TA is equal to the width of the bucket 43, and as the second set length TL2 when the width of the trench target area TA is greater than the width of the bucket 43.

The automatic trenching control method of the construction machine according to one embodiment of the present invention includes a step S30 of controlling the operation of the superstructure 30 and the working device 40 to perform trenching work of the working area W.

The automatic trenching control method of the construction machine according to one embodiment of the present invention includes a step S40 of inspecting the work quality by scanning the working area W.

The automatic trenching control method of the construction machine according to one embodiment of the present invention further includes a step S50 of controlling the driving of the undercarriage 20 such that the construction machine moves backward by a distance less than lengths TL1 and TL2 of the working area W, preferably a traveling limit length TR such that the construction machine may work in the next working area W, when the quality inspection of the working area W is completed.

FIG. 11 is a flowchart illustrating the automatic trenching control method of the construction machine when the quality of some rows within the working area does not satisfy a reference value.

Referring to FIGS. 5, 8, and 11, in step S30, the excavation control unit 194 performs excavation work from row Sn to row Si. Initially, n is set to 1.

In step S40, the quality inspection unit 195 inspects the quality of row Sn to determine whether an error in row Sn is equal to or less than a reference value. In step S40, the quality inspection unit 195 inspects the quality of the trenching work row by row from a front side to a rear side of the trench target area TA.

In step S41, the quality inspection unit 195 sets n to n+1 when the error in row Sn is equal to or less than the reference value.

In step S42, it is determined whether n is i+1. That is, the quality inspection unit 195 determines whether the quality of the Si row has been inspected.

In step S43, the quality inspection unit 195 sets n=n-M1. n-M1 is set to be greater than 1. Accordingly, in step S30, the excavation control unit 194 performs the excavation work again starting from row Sn-M1 positioned behind row Sn, which has failed the quality inspection in step S40, by a first margin M1.

In step S50, the traveling control unit 196 controls the driving of the undercarriage 20 to move backward by the traveling limit length TR when the quality inspection of the working area is completed.

Through the above-described automatic trenching system and automatic trenching control method of the construction machine, the construction machine inspects the quality of the worked trenches row by row, and when the quality is low, trenching work is performed again starting from a row, which is positioned forward of the row with the low quality, so that the precision of the trenching work can be improved.

In addition, since the driving of the undercarriage is controlled to travel the undercarriage by a distance less than the length of the trench that may be formed in place during the traveling of the construction machine, that is, the traveling limit length, the rear part of the trench already worked by the construction machine and the front part of the trench to be subsequently worked by the construction machine have an overlapping area corresponding to a predetermined margin, thereby improving the precision of the trenching work.

In addition, the construction machine automatically perform the trenching work, so that the work efficiency and the operator convenience can be improved.

The terminology used herein is employed solely to describe specific embodiments and is not intended to limit the present disclosure. As used herein, the singular forms "a," "an," and "the" are intended to include the plural forms unless the context clearly indicates otherwise. As used herein, the term "and/or" encompasses any and all possible combinations of one or more of the associated listed items. As used herein, the terms "comprises," "comprising," "includes," and/or "including" specify the presence of the stated functions, integers, steps, operations, elements, and/or components, but are understood not to exclude the presence or addition of one or more other functions, integers, steps, operations, elements, components, and/or groups thereof.

Although terms such as first and second may be used herein to describe various components, it is to be understood that these components are not limited by these terms. These terms are used solely to distinguish one element from another. For example, without departing from the scope of the present disclosure, the first component may be referred to as the second component, and similarly, the second component may be referred to as the first component.

Relative terms such as "below," "above," "upper side," "lower side," "horizontal," and "vertical" may be used herein to describe the relationship between one element and another as illustrated in the drawings. It should be understood that these terms, along with the terms discussed above, are intended to include different directions of the apparatus in addition to the directions illustrated in the drawings. When an element is described as being "connected" or "coupled" to another element, it is to be understood that the element may be directly connected or coupled to the other element, or may be connected or coupled via one or more intervening elements. In contrast, when an element is described as "directly connected" or "directly coupled" to another element, no intervening element exists therebetween.

Unless otherwise defined, all terms used herein (including technical and scientific terms) have the same meaning as commonly understood by those of ordinary skill in the art to which the present disclosure pertains. Additionally, the terms used herein are to be interpreted as having meanings consistent with their meanings in the context of this specification and the related art, and unless explicitly defined herein, are not to be construed in an idealized or overly formal manner.

## Claims

1. An automatic trenching system of a construction machine including an undercarriage, a superstructure rotatably coupled to the undercarriage, and a working device including a boom, an arm, and a bucket mounted on the superstructure, the automatic trenching system comprising:
a sensor unit that detects attitude information of the construction machine;
a setting unit capable of setting a trench target area to be worked on; and
an electronic control unit that controls the construction machine to perform trenching work along the set trench target area,
wherein the electronic control unit compares the width of the trench target area with the width of the bucket to determine the length and width of a working area in which the construction machine is capable of performing trenching work in place.

2. The automatic trenching system of claim 1,
wherein the electronic control unit determines the width of the working area to be equal to the width of the trench target area.

3. The automatic trenching system of claim 2,
wherein the electronic control unit determines the length of the working area as a first set length when the width of the trench target area is equal to the width of the bucket, and
the first set length is the length between a first position of the bucket when the working device extends by a certain distance and a second position of the bucket when a bottom surface of the bucket is horizontal to the ground.

4. The automatic trenching system of claim 2,
wherein the electronic control unit determines the length of the working area as a second set length when the width of the trench target area is greater than the width of the bucket, and
the second set length is the length between a first position of the bucket when the working device extends by a certain distance and a third position of the bucket when an angle formed between the bucket and a side surface of the trench target area is a predetermined angle.

5. The automatic trenching system of claim 1,
wherein the electronic control unit controls the operation of the superstructure and the working device such that the construction machine forms a trench in the working area.

6. The automatic trenching system of claim 5, further comprising a scanning unit that scans the working area to generate terrain information,
wherein the electronic control unit divides the working area into multiple rows and columns.

7. The automatic trenching system of claim 6,
wherein the electronic control unit inspects a quality of trenching work row by row from a front side to a rear side of the working area, based on the terrain information provided by the scanning unit.

8. The automatic trenching system of claim 7,
wherein the electronic control unit
inspects a quality of a next row when an error of the inspected row is equal to or less than a reference value, and
controls the operation of the superstructure and the working device such that the trenching work is performed again starting from a row positioned forward of the row, when the error of the inspected row is greater than the reference value.

9. The automatic trenching system of claim 7,
wherein the electronic control unit controls the driving of the undercarriage such that the construction machine moves backward by a distance less than the length of the working area, when an error of a last row of the working area is equal to or less than the reference value.

10. An automatic trenching control method of a construction machine including an undercarriage, a superstructure rotatably coupled to the undercarriage, and a working device including a boom, an arm, and a bucket mounted on the superstructure, the automatic trenching control method comprising:
a step (S10) of setting a trench target area to be worked on;
a step (S20) of determining the width and length of a working area in which the construction machine is capable of performing trenching work in place by comparing the width of the trench target area with the width of the bucket;
a step (S30) of controlling the operation of the superstructure and the working device to perform trenching work on the working area; and
a step (S40) of inspecting a quality of the work by scanning the working area.

11. The automatic trenching control method of claim 10,
wherein in step S40, the quality of the trenching work is inspected row by row from a front side to a rear side of the trench target area.

12. The automatic trenching control method of claim 11,
wherein in step S40, a quality of a next row is inspected when an error of the inspected row is equal to or less than a reference value, and
the trenching work is performed again starting from a row positioned forward of the row when the error of the inspected row is greater than the reference value.

13. The automatic trenching control method of claim 10, further comprising a step (S50) of controlling the driving of the undercarriage such that the construction machine moves backward by a distance less than the length of the working area so as to perform the work on a next working area.
